# EUROPEAN PATENT SPECIFICATION

(11) **EP 3 201 980 B1**
(45) Date of publication and mention of the grant of the patent: **15.01.2020**
(21) Application number: 14902953.0
(22) Date of filing: 30.09.2014
(51) Int. Cl.: H01M 10/04, H01M 2/02, H01M 2/08

(54) **ENERGY STORAGE SYSTEM FOR VEHICLE**
ENERGIESPEICHERUNGSSYSTEM FÜR EIN FAHRZEUG
SYSTÈME DE STOCKAGE D'ÉNERGIE POUR VÉHICULE

(43) Date of publication of application: 09.08.2017
(73) Proprietor: Volkswagen Aktiengesellschaft, 38440 Wolfsburg (DE)
(72) Inventor: LACHMUND, Uwe, 13053 Berlin (DE)
(86) International application number: PCT/CN2014/087871
(87) International publication number: WO 2016/049836

(56) References cited:
- EP-A1- 2 618 400
- CN-A- 103 069 607
- CN-A- 103 119 746
- JP-A- H08 315 854
- JP-A- 2002 343 320
- US-A1- 2013 252 058
- US-A1- 2013 252 058
- US-A1- 2013 295 435
- US-A1- 2014 120 413
- US-A1- 2014 120 413

## Description

### FIELD OF THE INVENTION

The invention relates to an energy storage system, in particular to a battery assembly for vehicle.

### BACKGROUND OF THE INVENTION

In recent years, hybrid electric vehicles (HEV) or electric vehicles (EV) have been widely developed, which are equipped with high-capacity energy storage systems such as battery assemblies and use a battery-power driven motor as a running drive source. A battery assembly generally comprises a lower housing, an upper housing and a plurality of battery modules contained in an internal space defined by the lower housing and the upper housing. The plurality of battery modules are connected in serial or in parallel to supply power *to* the battery-power driven motor. The internal space defined by the lower housing and the upper housing must be a seal space. Thus, on one hand, it is possible to prevent liquids such as water or cooling liquid from entering into the internal space to avoid any electric shock, leak and the like. On the other hand, it is possible to prevent gas produced when the battery assembly operates or liquid caused by breakage of the battery assembly from flowing out of the internal space to pollute the environment.

A conventional method uses bolts and matching nuts to connect the lower housing and the upper housing together. To fasten the lower housing and the upper housing together, there are flanges extending outwardly from the connecting portions of the lower housing and the upper housing. Bolts are inserted into holes formed in the flanges to fasten the flanges together by screwing nuts onto the respective bolts. However, when the flange of the lower housing and the flange of the upper housing held in abutment with each other are fastened together by screwing nuts onto bolts, the tightening force of the bolts in an axial direction acts on the flange of the lower housing and the flange of the upper housing, thereby forming a bulge in the locations where the bolts are inserted into the flange of the lower housing and the flange of the upper housing. The bulges will hinder a good seal connection from being formed between the flange of the lower housing and the flange of the upper housing or destroy a good seal connection between the flange of the lower housing and the flange of the upper housing.

US 2013/0252058 A1 and EP2 618 400 A1 each describe battery packs. US 2014/0120413 A1 describes an electrochemical device and a method for assembling an electrochemical device. US 2013/0295435 A1 describes a battery housing. JP 2002 3433320 A describes a storage case.

Thus, there is a need to make improvements on the conventional battery assembly for vehicle.

### SUMMARY OF THE INVENTION

Accordingly, it is an object of the present invention to provide an energy storage system for vehicle which can prevent a bulge from being formed in the connecting portions of a lower housing and an upper housing of the energy storage system, thereby establishing a good seal connection between the lower housing and the upper housing of the energy storage system.

According to one aspect of the present invention, it is to provide an energy storage system for vehicle comprising:
a lower housing;
an upper housing, the lower housing and the upper housing connecting with each other; and
a plurality of battery modules contained in an internal space defined by the lower housing and the upper housing, the plurality of battery modules being connected in serial or in parallel to supply power to a battery-power driven motor of the vehicle.

According to the invention, the lower housing and the upper housing connect with each other via a plurality of bolts and nuts screwed onto the respective bolts. The energy storage system for vehicle further comprises at least one frame element, the plurality of bolts pass through the at least one frame element so that the at least one frame element bears and absorbs a tightening force of the bolts in an axial direction caused by screwing the nut onto the bolt.

According to the invention in a first alternative, the at least one frame element comprises a first frame element having a notch opening toward its bottom and a second frame element having a notch opening toward its top, the upper edge of the lower housing is inserted into the notch of the first frame element and the lower edge of the upper housing is inserted into the notch of the second frame element, the bolts pass through a through hole in the first frame element and a respective through hole in the second frame element.

According to the invention in a second alternative, a first flange extends outwardly from and surrounds the upper edge of the body of the lower housing, the at least one frame element comprises a first frame element having a notch opening toward its side adjacent to the first flange and a second frame element having a notch opening toward its side adjacent to an edge of the upper housing, the first flange of the lower housing is inserted into the notch of the first frame element and the edge of the upper housing is inserted into the notch of the second frame element, the bolts pass through a through hole in the first frame element and a respective through hole in the second frame element.

Preferably, the width of the notch of the first frame element and the notch of the second frame element are sized so that an interference fit is established between the notch of the first frame element and the lower housing as well as the notch of the second frame element and the upper housing.

Preferably, the first frame element and the lower housing connect with each other by additional bolts passing through the first frame element and the lower housing at locations where the bolts are not provided, and/or the second frame element and the upper housing connect with each other by additional bolts passing through the second frame element and the upper housing at locations where the bolts are not provided.

Preferably, the at least one frame element comprises a plurality of frame element sections spliced with each other.

Preferably, the energy storage system is a battery assembly.

These and other objects, features and characteristics of the present invention, as well as the methods of operation and functions of the related elements of structure and the combination of parts and economies of manufacture, will become more apparent upon consideration of the following description and the appended claims with reference to the accompanying drawings, all of which form a part of this specification, wherein like reference numerals designate corresponding parts in the various figures. It is to be expressly understood, however, that the drawings are for the purpose of illustration and description only and are not intended as a definition of the limits of the invention.

### BRIEF DESCRIPTION OF THE DRAWINGS

FIG. 1 is a schematically perspective view of a battery assembly for vehicle according to the present invention.
FIG. 2 is a cross section view taken along a line A-A of FIG. 1, showing the connecting portions of a lower housing and an upper housing of the battery assembly for vehicle according to a first embodiment not according to the present invention.
FIG. 3 is a cross section view similar to FIG. 2, showing the connecting portions of a lower housing and an upper housing of the battery assembly for vehicle according to a second embodiment not according to the present invention.
FIG. 4 is a cross section view similar to FIG. 2, showing the connecting portions of a lower housing and an upper housing of the battery assembly for vehicle according to a preferred embodiment of the present invention.
FIG. 5 is a schematic view showing the connecting portions of a lower housing and an upper housing of the battery assembly for vehicle according to a fourth embodiment not according to the present invention.
FIG. 6A is a schematic view showing the connecting portions of a lower housing and an upper housing of the battery assembly for vehicle according to a fifth embodiment not according to the present invention.
FIG. 6B shows a variant of the fifth embodiment not according to the present invention.
FIG. 7A is a schematic view showing the connecting portions of a lower housing and an upper housing of the battery assembly for vehicle according to a sixth embodiment not according to the present invention.
FIG. 7B shows a variant of the sixth embodiment not according to the present invention.

### DETAILED DESCRIPTION OF THE PREFERRED EMBODIMENTS

In the following preferred embodiments, a battery assembly is described as an example of an energy storage system.

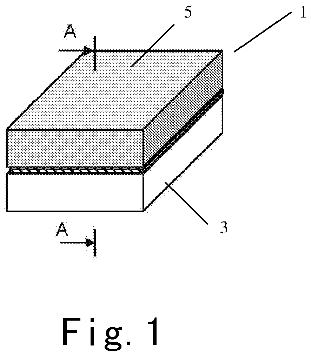

FIG. 1 is a schematically perspective view of a battery assembly for vehicle according to the present invention. As shown in Fig 1, a battery assembly 1 for vehicle according to the present invention generally comprises a lower housing 3, an upper housing 5 and a plurality of battery modules (invisible in Fig 1) contained in an internal space defined by the lower housing 3 and the upper housing 5. Although the lower housing 3 and the upper housing 5 are shown to be in a box shape, it should be understood that the lower housing 3 and the upper housing 5 may be in any desired shape. Although the lower housing 3 and the upper housing 5 may be made from plastic material, it is preferable that the lower housing 3 is made from metal material to support the weight of the battery modules. Of course, the upper housing 5 may be made from metal material too. The plurality of battery modules are connected in serial or in parallel to supply power to a battery-power driven motor of a vehicle.

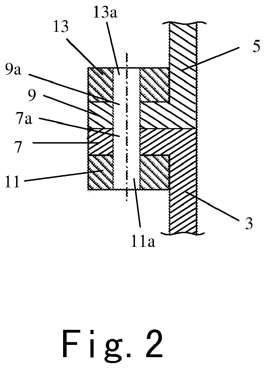

FIG. 2 is a cross section view taken along a line A-A of FIG. 1, showing the connecting portions of a lower housing and an upper housing of the battery assembly for vehicle according to a first embodiment not according to the present invention. As shown in Fig 2, a first flange 7 extends outwardly from and surrounds the upper edge of the body of the lower housing 3, and a plurality of first through holes 7a are formed in the first flange 7 of the lower housing 3. Similarly, a second flange 9 extends outwardly from and surrounds the lower edge of the body of the upper housing 5, and a plurality of second through holes 9a are formed in the second flange 9 of the upper housing 5. It is preferable that the plurality of first through holes 7a are distributed evenly in the first flange 7 of the lower housing 3 and the plurality of second through holes 9a are distributed evenly in the second flange 9 of the upper housing 5. The first through holes 7a should align with the respective second through holes 9a when the lower housing 3 and the upper housing 5 are held in abutment with each other. According to this embodiment, a frame element surrounding the upper housing and/or the lower housing is provided adjacent to at least one of the first flange 7 and the second flange 9. In the embodiment as shown in Fig 2, a first frame element 11 surrounding the lower housing 3 is provided adjacent to the first flange 7 and a second frame element 13 surrounding the upper housing 5 is provided adjacent to the second flange 9. The first frame element 11 and the second frame element 13 have third through holes 11 a and fourth through holes 13a aligning with both the first through holes 7a and the second through holes 9a. When connecting the lower housing 3 and the upper housing 5 together, the bolts (not shown) pass through a third through hole I 1a, a respective first through hole 7a, a respective second through hole 9a and a respective fourth through hole 13a, then nuts (not shown) are screwed onto the respective bolts. The first frame element 11 and the second frame element 13 may be made from any suitable materials such as metal or plastic material. Although in the embodiment the first frame element 11 and the second frame element 13 has a rectangular cross section, the first frame element 11 and the second frame element 13 may have any other suitable cross section such as trapezoidal cross section. Further, the first frame element 11 may comprise a plurality of first frame element sections spliced with each other. Similarly, the second frame element 13 may comprise a plurality of second frame element sections spliced with each other. It should be understood that a seal layer may be disposed between the first flange 7 and the second flange 9.

By providing the first frame element 11 adjacent to the first flange 7 and the second frame element 13 adjacent to the second flange 9, the first frame element 11 and the second frame element 13 may bear and absorb the tightening force of the bolts in an axial direction when screwing the nuts onto the bolts, thereby preventing a bulge from being formed in the locations where the bolts are inserted into the first flange 7 of the lower housing 3 and the second flange 9 of the upper housing 5. Thus, a good seal connection is established between the first flange 7 of the lower housing 3 and the second flange 9 of the upper housing 5.

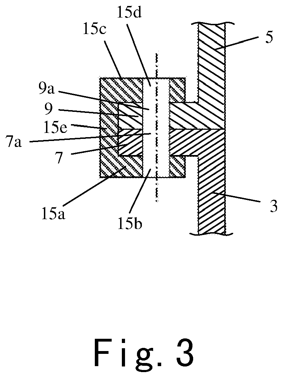

FIG. 3 is a cross section *view* similar to FIG. 2, showing the connecting portions of a lower housing and an upper housing of the battery assembly for vehicle according to a second embodiment not according to the present invention. The lower housing 3 and the upper housing 5 in the second embodiment have the same structure as in the first embodiment. The second embodiment is different from the first embodiment by a frame element 15 having a U-shaped cross section. The frame element 15 comprises a first wall 15a having through holes 15b formed therein, a second wall 15c having through holes 15d formed therein and a connecting wall 1 Se connecting the first wall 15a with the second wall 15c. When connecting the lower housing 3 and the upper housing 5 together, the frame element 15 is mounted onto the first flange 7 and the second flange 9 so that the first flange 7 and the second flange 9 are received within a U-shaped cavity defined by the frame element 15. Bolts (not shown) pass through a through hole 15b in the first wall 15a, a respective first through hole 7a, a respective second through hole 9a and a respective through hole 15d in the second wall 15c, then nuts (not shown) are screwed onto the respective bolts. It should be understood that a seal layer may be disposed between the first flange 7 and the second flange 9. Further, a seal layer also may be disposed between the frame element 15 and the first flange 7 as well as the second flange 9. Preferably, a distance from the first wall I5a to the second wall 15c is sized to match with the thickness of the first flange 7 and the second flange 9. More preferably, a distance from the opening of the U-shaped cavity to the connecting wall 1 5e is sized so that the free ends of the first flange 7 and the second flange 9 abut against the connecting wall 1 5e when the frame element 15 is mounted onto the first flange 7 and the second flange 9. Of course, the frame element 15 also may comprise a plurality of frame element sections spliced with each other.

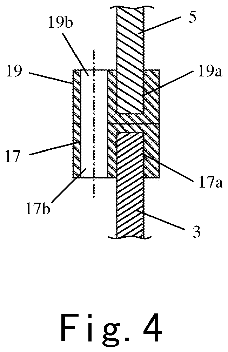

FIG. 4 is a cross section view similar to FIG. 2, showing the connecting portions of a lower housing and an upper housing of the battery assembly for vehicle according to a preferred embodiment of the present invention. In the preferred embodiment, neither the lower housing 3 nor the upper housing 5 has a flange extending outwardly from its edge. A first frame element 17 has a notch 17a opening toward its bottom and through holes 17b formed therein, and a second frame element 19 has a notch 19a opening toward its top and through holes 19b formed therein. When connecting the lower housing 3 and the upper housing 5 together, the upper edge of the lower housing 3 is inserted into the notch 17a of the first frame element 17 and the lower edge of the upper housing 5 is inserted into the notch 19a of the second frame element 19. Bolts (not shown) pass through a through hole 17b in the frame element 17 and a respective through hole 19b in the frame element 19, then nuts (not shown) are screwed onto the respective bolts. The width of the notch 17a of the first frame element 17 and the notch 19a of the second frame element 19 are sized so that an interference fit is established between the notch 17a of the first frame element 17 and the lower housing 3 as well as the notch 19a of the second frame element 19 and the upper housing 5. The first frame element 17 and the lower housing 3 may connect with each other by the bolts passing through the first frame element 17 and the lower housing 3 at locations where no through hole 17b is provided. Similarly, the second frame element 19 and the upper housing 5 may connect with each other by the bolts passing through the second frame element 19 and the upper housing 5 at locations where no through hole 19b is provided. Further, a seal layer may be disposed between the notch 17a of the first frame element 17 and the lower housing 3 as well as the notch 19a of the second frame element 19 and the upper housing 5. Also, a seal layer may be disposed between the first frame element 17 and the second frame element 19. Further, the first frame element 17 may comprise a plurality of first frame element sections spliced with each other. Similarly, the second frame element 19 may comprise a plurality of second frame element sections spliced with each other.

It should be understood that, just like in the first and second embodiments, the lower housing 3 may comprises a first flange 7 extending outwardly from and surrounding the upper edge of the body of the lower housing 3 and the upper housing 5 may comprises a second flange 9 extending outwardly from and surrounding the lower edge of the body of the upper housing 5. In such a case, the notch 17a opens toward its side adjacent to the first flange 7 and the notch 19a opens toward its side adjacent to the second flange 9.

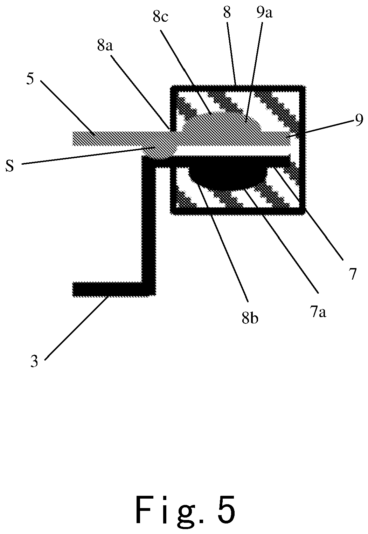

FIG. 5 is a schematic view showing the connecting portions of a lower housing and an upper housing of the battery assembly for vehicle according to an embodiment not according to the present invention. Besides a lower housing 3, an upper housing 5 and a plurality of battery modules contained in an internal space defined by the lower housing 3 and the upper housing 5, the battery assembly 1 for vehicle according to the embodiment further comprises a frame element 8 surrounding the lower housing 3 and the upper housing 5. The frame element 8 has a slot 8a opening to a side of the frame element 8. Preferably, the frame element 8 is made of elastic material. The width of the slot 8a is slightly smaller than the total thickness of the first flange 7 of the lower housing 3 and the second flange (or an edge) 9 of the upper housing 5 so that the first flange 7 and the second flange (or the edge) 9 are clamped tightly together when the first flange 7 and the second flange 9 are inserted into the slot 8a of the frame element 8. The frame element 8 may comprise a plurality of frame element sections spliced with each other. To prevent the first flange 7 and the second flange (or the edge) 9 from disengaging from the frame element 8, a projection is formed on a surface of the first flange 7 and/or the second flange (or the edge) 9 contacting the frame element 8 and a respective recess mating with the projection is formed in the frame element 8 to receive the projection. In the shown embodiment, a projection 7a is formed on a surface of the first flange 7 contacting the frame element 8 and a recess 8b mating with the projection 7a is formed in the frame element 8 to receive the projection 7a. Similarly, a projection 9a is formed on a surface of the second flange (or the edge) 9 contacting the frame element 8 and a recess 8c mating with the projection 9a is formed in the frame element 8 to receive the projection 9a. It should be understood that a seal layer S may be disposed between the first flange 7 and the second flange (or the edge) 9.

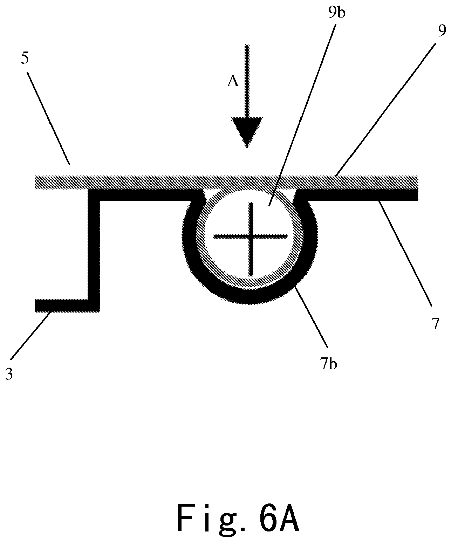

FIG. 6A is a schematic view showing the connecting portions of a lower housing and an upper housing of the battery assembly for vehicle according to a fifth embodiment not according to the present invention. Besides a lower housing 3, an upper housing 5 and a plurality of battery modules contained in an internal space defined by the lower housing 3 and the upper housing 5, a groove 7b surrounding the lower housing 3 is formed in the first flange 7 of the lower housing 3 and opens to the second flange (an edge) 9 of the upper housing 5, and a ridge 9b surrounding the upper housing 5 is formed in the second flange (or the edge) 9 of the upper housing 5 and faces the lower housing 3. In the shown embodiment, both the ridge 9b and the groove 7b are in a cylindrical shape. It should be understood that both the ridge 9b and the groove 7b may be in any suitable shape. When the upper housing 5 is pressed toward the lower housing 3 along a direction indicated by an arrow A, the ridge is snapped into the groove to held sealingly and tightly the lower housing 3 and the upper housing 5 because the opening of the groove 7b is slightly smaller than the diameter of the ridge 9b. Further, a seal layer may be disposed between the first flange 7 and the second flange (or the edge) 9.

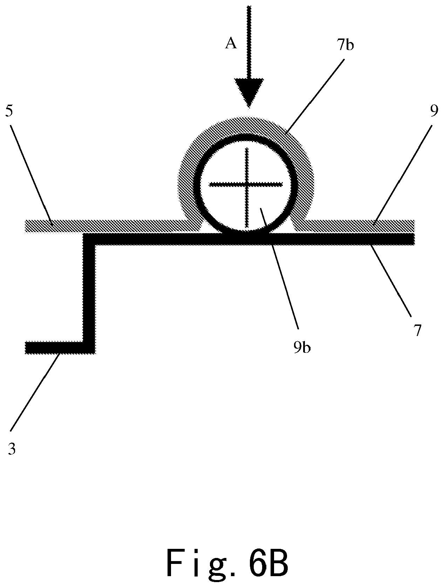

FIG. 6B shows a variant of the fifth embodiment not according to the present invention. In the embodiment shown in FIG.6B, a ridge 9b surrounding the lower housing 3 is formed on the first flange 7 of the lower housing 5 and faces the second flange (or the edge) 9 of the upper housing 5, and a groove 7b surrounding the upper housing 5 is formed in the second flange 9 of the upper housing 5 and opens to the lower housing 3. It should be understood that a ridge may be formed on each one of the first flange 7 and the second flange (or the edge) 9 and a respective groove also may be formed in each one of the first flange 7 and the second flange (or the edge) 9. Further, a seal layer may be disposed between the first flange 7 and the second flange (or the edge) 9.

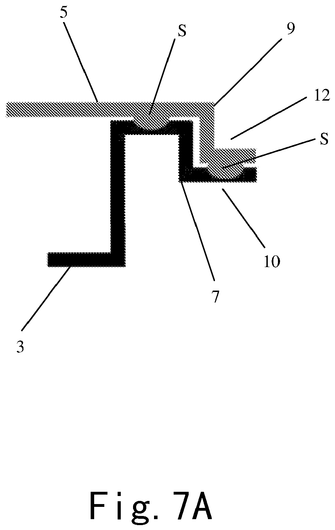

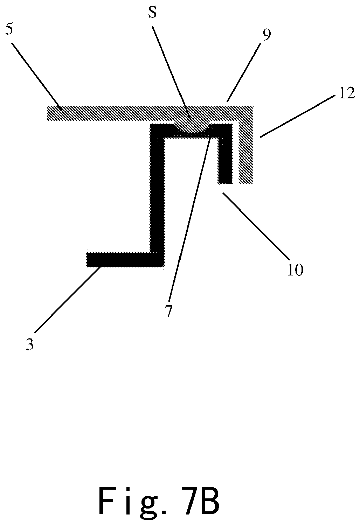

FIG. 7A is a schematic view showing the connecting portions of a lower housing and an upper housing of the battery assembly for vehicle according to a sixth embodiment not according to the present invention. FIG. 7B shows a variant of the sixth embodiment not according to the present invention. Besides a lower housing 3, an upper housing 5 and a plurality of battery modules contained in an internal space defined by the lower housing 3 and the upper housing 5, the first flange 7 of the lower housing 3 is bent to form a first bent portion 10, and the second flange (or the edge) 9 of the upper housing 5 is also bent to form a second bent portion 12. The first bent portion I O and the second bent portion 12 are shaped and sized in such a way that the lower housing 3 and the upper housing 5 may be held sealingly and tightly together when one of the first bent portion 10 and the second bent portion 12 is snapped into the other one of the first bent portion 10 and the second bent portion 12. Further, a seal layer S may be disposed between the first flange 7 and the second flange (or the edge) 9.

In the fourth, fifth and sixth embodiment not according to the present invention, the lower housing 3 and the upper housing 5 connect with each other without using any bolt while a good seal connection is established between the first flange 7 of the lower housing 3 and the second flange (or the edge) 9 of the upper housing 5.

## Claims

1. An energy storage system for vehicle comprising:
a lower housing (3);
an upper housing (5), the lower housing (3) and the upper housing (5) connecting with each other; and
a plurality of battery modules contained in an internal space defined by the lower housing (3) and the upper housing (5), the plurality of battery modules being connected in serial or in parallel to supply power to a battery-power driven motor of the vehicle,
wherein the lower housing (3) and the upper housing (5) connect with each other via a plurality of bolts and nuts screwed onto the respective bolts; and
wherein the energy storage system for vehicle further comprises at least one frame element, the plurality of bolts pass through the at least one frame element so that the at least one frame element bears and absorbs a tightening force of the bolts in an axial direction caused by screwing the nut onto the bolt,
wherein the at least one frame element comprises a first frame element (17) having a notch (17 a) opening toward its bottom and a second frame element (19) having a notch (19a) opening toward its top, the upper edge of the lower housing (3) is inserted into the notch (17a) of the first frame element (17) and the lower edge of the upper housing (5) is inserted into the notch (19a) of the second frame element (19), the bolts pass through a through hole in the first frame element (17) and a respective through hole in the second frame element (19), or
wherein a first flange (7) extends outwardly from and surrounds the upper edge of the body of the lower housing (3), the at least one frame element comprises a first frame element (17) having a notch (17a) opening toward its side adjacent to the first flange (7) and a second frame element (19) having a notch (19a) opening toward its side adjacent to an edge of the upper housing (5), the first flange (7) of the lower housing (3) is inserted into the notch (17a) of the first frame element (17) and the edge of the upper housing (5) is inserted into the notch (19a) of the second frame element (19), the bolts pass through a through hole in the first frame element (17) and a respective through hole in the second frame element (19).

2. The energy storage system for vehicle according to claim 1, wherein the width of the notch (17a) of the first frame element (17) and the notch (19a) of the second frame element (19) are sized so that an interference fit is established between the notch (17a) of the first frame element (17) and the lower housing (3) as well as the notch (19a) of the second frame element (19) and the upper housing (5).

3. The energy storage system for vehicle according to claim 1, wherein the first frame element (17) and the lower housing (3) connect with each other by further bolts passing through the first frame element (17) and the lower housing (3) at locations where the bolts are not provided, and/or the second frame element (19) and the upper housing (5) connect with each other by further bolts passing through the second frame element (19) and the upper housing (5) at locations where the bolts are not provided.

4. The energy storage system for vehicle according to claim 1 to 3, wherein the energy storage system is a battery assembly (1).

## Patentansprüche

1. Energiespeicherungssystem für ein Fahrzeug, Folgendes umfassend:
ein unteres Gehäuse (3);
ein oberes Gehäuse (5), wobei das untere Gehäuse (3) und das obere Gehäuse (5) miteinander verbunden sind; und
mehrere Batteriemodule, die in einem durch das untere Gehäuse (3) und das obere Gehäuse (5) definierten Innenraum enthalten sind, wobei die mehreren Batteriemodule in Reihe oder parallel geschaltet sind, um einem batteriebetriebenen Motor des Fahrzeugs Strom zuzuführen, wobei das untere Gehäuse (3) und das obere Gehäuse (5) über mehrere Bolzen und auf die entsprechenden Bolzen geschraubte Muttern miteinander verbunden sind; und
wobei das Energiespeicherungssystem für das Fahrzeug ferner mindestens ein Rahmenelement umfasst, wobei die mehreren Bolzen durch das mindestens eine Rahmenelement verlaufen, sodass das mindestens eine Rahmenelement eine Anzugskraft der Bolzen in Axialrichtung aufnimmt und absorbiert, die durch das Schrauben der Mutter auf den Bolzen entsteht,
wobei das mindestens eine Rahmenelement ein erstes Rahmenelement (17), das eine nach unten offene Kerbe (17a) aufweist, und ein zweites Rahmenelement (19), das eine nach oben offene Kerbe (19a) aufweist, umfasst, wobei die Oberkante des unteren Gehäuses (3) in die Kerbe (17a) des ersten Rahmenelements (17) eingesetzt wird und die Unterkante des oberen Gehäuses (5) in die Kerbe (19a) des zweiten Rahmenelements (19) eingesetzt wird, wobei die Bolzen durch eine Durchgangsbohrung im ersten Rahmenelement (17) und eine entsprechende Durchgangsbohrung im zweiten Rahmenelement (19) verlaufen, oder
wobei sich ein erster Flansch (7) von der Oberkante des Körpers des unteren Gehäuses (3) nach außen erstreckt und diese umgibt, wobei das mindestens eine Rahmenelement ein erstes Rahmenelement (17), das eine zu der an den ersten Flansch (7) angrenzenden Seite offene Kerbe (17a) aufweist, und ein zweites Rahmenelement (19), das eine zu der an eine Kante des oberen Gehäuses (5) angrenzenden Seite offene Kerbe (19a) aufweist, umfasst, wobei der erste Flansch (7) des unteren Gehäuses (3) in die Kerbe (17a) des ersten Rahmenelements (17) eingesetzt wird und die Kante des oberen Gehäuses (5) in die Kerbe (19a) des zweiten Rahmenelements (19) eingesetzt wird, wobei die Bolzen durch eine Durchgangsbohrung im ersten Rahmenelement (17) und eine entsprechende Durchgangsbohrung im zweiten Rahmenelement (19) verlaufen.

2. Energiespeicherungssystem für ein Fahrzeug nach Anspruch 1, wobei die Breite der Kerbe (17a) des ersten Rahmenelements (17) und der Kerbe (19a) des zweiten Rahmenelements (19) so dimensioniert sind, dass zwischen der Kerbe (17a) des ersten Rahmenelements (17) und dem unteren Gehäuse (3) sowie der Kerbe (19a) des zweiten Rahmenelements (19) und dem oberen Gehäuse (5) eine Presspassung erzeugt wird.

3. Energiespeicherungssystem für ein Fahrzeug nach Anspruch 1, wobei das erste Rahmenelement (17) und das untere Gehäuse (3) über weitere Bolzen, die an Stellen durch das erste Rahmenelement (17) und das untere Gehäuse (3) verlaufen, an denen keine Bolzen vorgesehen sind, miteinander verbunden sind und/oder wobei das zweite Rahmenelement (19) und das obere Gehäuse (5) über weitere Bolzen, die an Stellen durch das zweite Rahmenelement (19) und das obere Gehäuse (5) verlaufen, an denen keine Bolzen vorgesehen sind, miteinander verbunden sind.

4. Energiespeicherungssystem für ein Fahrzeug nach einem der Ansprüche 1 bis 3, wobei das Energiespeicherungssystem eine Batterieanordnung (1) ist.

## Revendications

1. Système de stockage d'énergie pour véhicule, comprenant :
un logement inférieur (3) ;
un logement supérieur (5), le logement inférieur (3) et le logement supérieur (5) se raccordant l'un à l'autre ; et
une pluralité de modules de batterie contenus dans un espace interne délimité par le logement inférieur (3) et le logement supérieur (5), la pluralité de modules de batterie étant raccordés en série ou en parallèle pour alimenter un moteur électrique mû par batterie du véhicule,
dans lequel le logement inférieur (3) et le logement supérieur (5) se raccordent l'un à l'autre par l'intermédiaire d'une pluralité de boulons et d'écrous vissés sur les boulons respectifs ; et
dans lequel le système de stockage d'énergie pour véhicule comprend en outre au moins un élément de cadre, la pluralité de boulons passant à travers ledit élément de cadre si bien que ledit élément de cadre supporte et absorbe une force de serrage des boulons dans une direction axiale, provoquée par le vissage de l'écrou sur le boulon ;
dans lequel ledit élément de cadre comprend un premier élément (17) de cadre comportant une encoche (17a) s'ouvrant vers son bas et un second élément (19) de cadre comportant une encoche (19a) s'ouvrant vers son dessus, le bord supérieur du logement inférieur (3) est inséré dans l'encoche (17a) du premier élément (17) de cadre et le bord inférieur du logement supérieur (5) est inséré dans l'encoche (19a) du second élément (19) de cadre, les boulons passant par un trou traversant dans le premier élément (17) de cadre et un trou traversant correspondant dans le second élément (19) de cadre ; ou
dans lequel une première bride (7) s'étend vers l'extérieur depuis le bord supérieur du corps du logement inférieur (3) et l'entoure, ledit élément de cadre comprend un premier élément (17) de cadre comportant une encoche (17a) s'ouvrant vers son côté adjacent à la première bride (7) et un second élément (19) de cadre comportant une encoche (19a) s'ouvrant vers son côté adjacent à un bord du logement supérieur (5), la première bride (7) du logement inférieur (3) est insérée dans l'encoche (17a) du premier élément (17) de cadre et le bord du logement supérieur (5) est inséré dans l'encoche (19a) du second élément (19) de cadre, les boulons passant par un trou traversant dans le premier élément (17) de cadre et un trou traversant correspondant dans le second élément (19) de cadre.

2. Système de stockage d'énergie pour véhicule selon la revendication 1, dans lequel les largeurs de l'encoche (17a) du premier élément (17) de cadre et de l'encoche (19a) du second élément (19) de cadre sont dimensionnées de façon à établir un ajustement avec serrage entre l'encoche (17a) du premier élément (17) de cadre et le logement inférieur (3) ainsi qu'entre l'encoche (19a) du second élément (19) de cadre et le logement supérieur (5).

3. Système de stockage d'énergie pour véhicule selon la revendication 1, dans lequel le premier élément (17) de cadre et le logement inférieur (3) se raccordent l'un à l'autre par d'autres boulons traversant le premier élément (17) de cadre et le logement inférieur (3) à des emplacements où les boulons ne sont pas disposés, et/ou le second élément (19) de cadre et le logement supérieur (5) se raccordent l'un à l'autre par d'autres boulons traversant le second élément (19) de cadre et le logement supérieur (5) à des emplacements où les boulons ne sont pas disposés.

4. Système de stockage d'énergie pour véhicule selon l'une quelconque des revendications 1 à 3, dans lequel le système de stockage d'énergie est un ensemble batterie (1).
